# FASCICULE DE BREVET EUROPEEN

(11) **EP 1 978 616 B1**
(45) Date de publication et mention de la délivrance du brevet: **14.02.2018**
(21) Numéro de dépôt: 08290248.7
(22) Date de dépôt: 14.03.2008
(51) Int. Cl.: H02G 3/22, H02G 15/013

(54) **Traversée de paroi et son procédé de fabrication**
Wanddurchführung und ihr Herstellungsverfahren
Wall bushing and manufacturing method thereof

(30) Priorité: 06.04.2007 FR 0702530
(43) Date de publication de la demande: 08.10.2008
(73) Titulaire: KSB S.A.S, 92230 Gennevilliers (FR)
(72) Inventeur: Symoens, Louis, 59155 Faches-Thumesnil (FR)
(74) Mandataire: Eidelsberg, Victor Albert

(56) Documents cités:
- EP-A- 1 628 368
- DE-A1- 3 412 786

## Description

La présente invention se rapporte aux traversées de paroi et plus particulièrement mais non uniquement à celles utilisées pour l'alimentation électrique des pompes submersibles.

On connaît déjà par la demande de brevet français n° 2 874462 une traversée de paroi comprenant un connecteur électrique relié à un faisceau de câbles. Seule la partie du connecteur voisine du faisceau et la partie du faisceau voisine du connecteur sont enrobées d'une masse de résine. La résine est entourée d'un corps tubulaire. Cette traversée de paroi donne satisfaction, mais elle est coûteuse, tant par les pièces misent en jeu, telle qu'un presse étoupe de construction particulière, que par son procédé de fabrication, qui nécessite d'effectuer des opérations de chaque côté de la traversée, c'est-à-dire du côté extérieur dont part le câble et du côté opposé dit côté intérieur. Il faut effectuer plusieurs retournements.

L'invention pallie ces inconvénients par une traversée de paroi qui n'utilise plus que des pièces simples du commerce et dont le procédé de fabrication est simplifié considérablement. En outre, la traversée de paroi suivant l'invention est moins fragile et moins sensible au choc que la traversée antérieure.

L'invention a donc pour objet une traversée de paroi comprenant un connecteur électrique relié à un faisceau de câbles, seulement la partie du connecteur voisine du faisceau et la partie du faisceau voisine du connecteur étant enrobée d'une masse de résine et la résine étant entourée d'un corps tubulaire, caractérisée en ce que le corps tubulaire a successivement, dans le sens de l'intérieur à l'extérieur où se prolonge le câble, un premier tronçon ayant un premier diamètre suivi d'un deuxième tronçon de diamètre plus petit que celui du premier tronçon, une bague en regard du premier tronçon serré par un collier de serrage du câble la poussant en direction du deuxième tronçon et un joint annulaire logé entre le deuxième tronçon et le câble, la résine étant en contact avec la face extérieure du collier et avec la face intérieure de la bague.

On se contente ainsi maintenant, pour fabriquer la traversée de paroi, outre des mêmes pièces de base que dans la technique antérieure, telles que le connecteur, le faisceau de câble et la résine, des pièces simples que sont une bague, un collier et un joint annulaire. En outre, ces pièces qui assurent l'étanchéité sont bien mieux protégées des chocs en étant à l'intérieur du corps que ne l'était le presse étoupe de la traversée antérieure.

En outre, cette traversée se fabrique plus facilement comme l'indique le procédé suivant l'invention de fabrication d'une traversée de paroi qui comprend les stades successifs suivants :
- on enfile un faisceau de câbles dans un corps tubulaire tel qu'indiqué suivant l'invention jusqu'à ce qu'une partie de l'extrémité libre du faisceau dépasse du corps tubulaire,
- on enfile successivement par cette partie de l'extrémité libre le joint annulaire, la bague et le collier de serrage du câble,
- on sertit des fils dénudés du câble à des contacts d'un connecteur,
- on retire le câble vers l'extérieur jusqu'à ce que le joint vienne se loger entre le deuxième tronçon du corps et le câble poussé par la bague, elle-même poussée par le collier de serrage, la bague et le collier venant dans le premier tronçon du corps, les deux tronçons étant immédiatement voisins,
- après avoir tourné le côté intérieur de la traversée vers le haut, on coule de la résine polymérisable dans le premier-tronçon et on la laisse polymériser.

On voit ainsi que le procédé n'implique plus de monter des pièces que du côté intérieur de la traversée sur le câble.

Suivant l'invention, il faut entendre par faisceau de câbles également des fils dénudés, voir un seul fil éventuellement à mettre en liaison avec un contact.

Contrairement à la traversée décrite au DE 3 412 786 A1, et pour autant que l'on assimile le dispositif 7 de soulagement de la pression, qui y est décrit, à un collier, suivant la présente invention le collier s'appuie directement sur la bague d'appui du joint annulaire, qui elle-même s'appuie sur le corps tubulaire. On a donc un appui franc, métal sur métal et non pas un collier métallique dans une résine plus ou moins ferme, plus ou moins dure. Le collier de serrage a deux fonctions :
- la première est, lors du montage, d'appuyer sur la bague qui elle-même positionne le joint annulaire dans le deuxième tronçon.
- La deuxième est d'assurer un amarrage du câble et son maintien en position dans le cas d'effort de traction sur celui-ci.
Dans le document antérieur, le joint d'étanchéité est maintenu en position par une bague d'appui 14, montée par exemple pressée dans le corps.

Au dessin annexé, donné uniquement à titre d'exemple :
La figure 1 est une vue en coupe d'une traversée de paroi suivant l'invention et
Les figures 2 à 6 sont des schémas illustrant le procédé suivant l'invention.

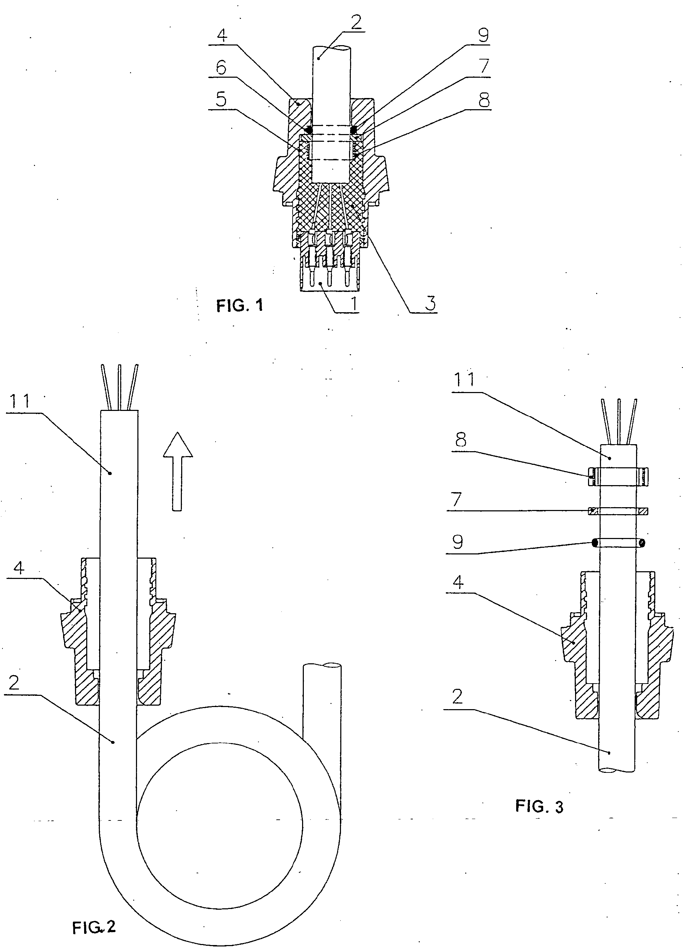

La traversée de paroi représentée à la figure 1 comprend un connecteur 1 électrique relié à un faisceau 2 de câbles. Seule la partie du connecteur 1 voisine du faisceau 2 et la partie du faisceau 2 voisine du connecteur 1 sont enrobées d'une masse 3 de résine.

Le faisceau 2, la résine 3 et le connecteur 1 sont enfilés dans un corps 4 tubulaire.

Le corps 4 tubulaire a successivement, dans le sens de l'intérieur à l'extérieur où se prolonge le câble 2, c'est-à-dire dans le sens du connecteur 1 à la masse 3 de résine, un premier tronçon 5 ayant un premier diamètre suivi d'un deuxième tronçon 6 de diamètre plus petit que celui du premier tronçon 5, une bague 7 en regard du premier tronçon 5 serré par un collier 8 de serrage du câble 2 la poussant en direction du deuxième tronçon 6 et un joint 9 annulaire logé entre le deuxième tronçon 6 et le câble 2. La résine est en contact avec la face extérieure du collier 8 et avec la face intérieure de la bague 7.

On fabrique cette traversée de paroi de la façon suivante :

Suivant la figure 2, on enfile le faisceau 2 de câbles dans le corps 4 tubulaire jusqu'à ce qu'une partie 11 de l'extrémité libre du faisceau 2 de câbles dépasse du corps 4 tubulaire.

Suivant la figure 3, on enfile successivement par cette partie 11 de l'extrémité libre le joint 9 annulaire la bague 7 et le collier 8 de serrage du câble 2.

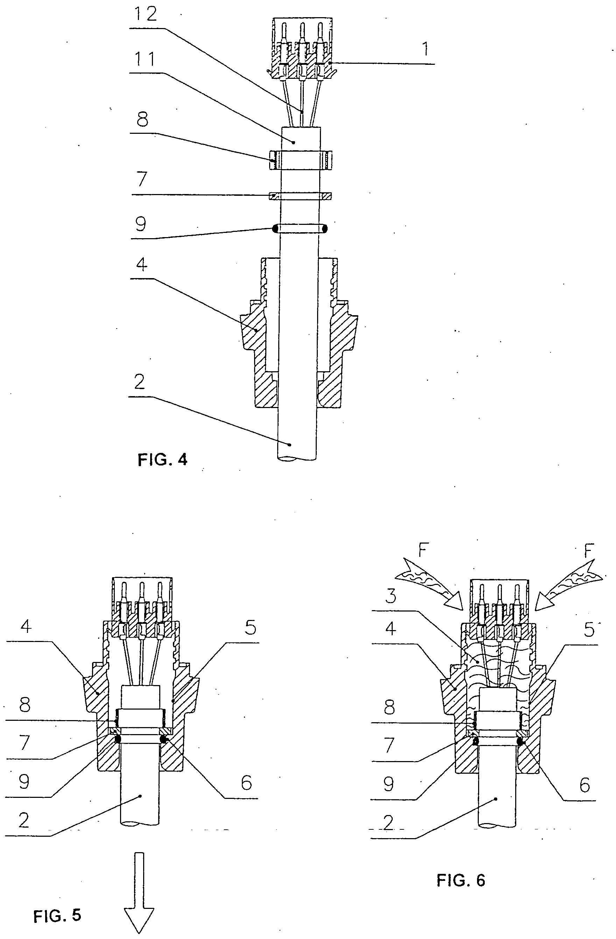

Puis suivant la figure 4, on sertit des fils 12 dénudés du câble 2 à des contacts du connecteur 1.

Suivant la figure 5, on retire le câble 2 vers l'extérieur jusqu'à ce que le joint 9 vienne se loger entre le deuxième tronçon 6 du corps et le câble 2 en étant poussé par la bague 7. La bague 7 elle-même est poussée par le collier 8 de serrage. La bague 7 et le collier 8 viennent dans le premier tronçon 5 du corps du plus grand diamètre que le deuxième tronçon 6, les deux tronçons se succédant immédiatement avec un épaulement entre eux ayant une partie perpendiculaire à l'axe.

Suivant la figure 6, après avoir tourné le côté intérieur de la traversée vers le haut, on coule suivant la flèche F de la résine polymérisable en une masse 3 dans le premier tronçon 5 et on la laisse polymériser.

On voit que le montage des pièces 5, à savoir la bague 7 le collier 8 et le joint 9, ne s'effectue que du côté intérieur de la traversée.

## Revendications

1. Traversée de paroi comprenant :
- un faisceau (2) de câbles enrobé d'une masse (3) de résine, la résine étant entourée d'un corps (4) tubulaire, ayant successivement, dans le sens de l'intérieur à l'extérieur où se prolonge le câble (2), un premier tronçon (5) d'un premier diamètre, suivi d'un deuxième tronçon (6) de diamètre plus petit que celui du premier tronçon (5), et la traversée comprend :
• un collier (8) de serrage du câble (2),
• une bague (7) en regard du premier tronçon (5) et
• un joint (9) annulaire logé entre le deuxième tronçon (6) et le câble (2),
- la masse (3) de résine étant en contact avec la face extérieure du collier (8) et avec la face intérieure de la bague (7),
**caractérisée** en qu'un connecteur (1) électrique est relié au faisceau (2) de câbles, seulement la partie du connecteur (1) voisine du faisceau (2) et la partie du faisceau (2) voisine du connecteur (1) étant enrobées de la masse (3) de résine, et en ce que le collier (8) de serrage du câble pousse la bague (7) en direction du deuxième tronçon (6).

2. Procédé de fabrication d'une traversée successive de paroi, **caractérisé en ce qu'**il comprend les stades :
- on enfile un faisceau de câbles dans un corps tubulaire jusqu'à ce qu'une partie de l'extrémité libre du faisceau dépasse du corps tubulaire,
- on enfile successivement par cette partie de l'extrémité libre un joint (9) annulaire, une bague (7) et un collier (8) de serrage du câble,
- on sertit des fils (12) dénudés du câble (2) à des contacts d'un connecteur (1),
- on retire le câble (2) vers l'extérieur jusqu'à ce que le joint (9) vienne se loger entre un deuxième tronçon (6) du corps et le câble poussé par la bague (7), elle-même poussée par le collier de serrage, la bague (7) et le collier (8) venant dans un premier tronçon (5) du corps de plus grand diamètre que le deuxième tronçon (6), les deux tronçons étant immédiatement voisins et
- après avoir tourné le côté intérieur de la traversée vers le haut, on coule de la résine (3) polymérisable dans le premier tronçon (5) et on la laisse polymériser.

## Patentansprüche

1. Wanddurchführung, umfassend:
- einen Strang (2) von Kabeln, der mit einer Harzmasse (3) ummantelt ist, wobei das Harz von einem rohrförmigen Körper (4) umgeben ist, der in der Richtung von innen nach außen, wo sich das Kabel (2) forstsetzt, nacheinander einen ersten Abschnitt (5) mit einem ersten Durchmesser, gefolgt von einem zweiten Abschnitt (6) mit kleinerem Durchmesser als der erste Abschnitt (5) aufweist, und die Durchführung umfasst:
∘ eine Schelle (8) zum Festklemmen des Kabels (2),
∘ einen Ring (7) gegenüber dem ersten Abschnitt (5) und
∘ eine Ringdichtung (9), die zwischen dem zweiten Abschnitt (6) und dem Kabel (2) aufgenommen ist,
- wobei die Harzmasse (3) mit der Außenseite der Schelle (8) und mit der Innenseite des Rings (7) in Kontakt ist,
**dadurch gekennzeichnet, dass** ein elektrischer Verbinder (1) mit dem Kabelstrang (2) verbunden ist, wobei nur der Teil des Verbinders (1), welcher zu dem Strang (2) benachbart ist, und der Teil des Strangs (2), welcher zu dem Verbinder (1) benachbart ist, mit der Harzmasse (3) ummantelt sind, und dass die Schelle (8) zum Festklemmen des Kabels den Ring (7) in Richtung des zweiten Abschnitts (6) schiebt.

2. Verfahren zur Herstellung einer stufenweisen Wanddurchführung, **dadurch gekennzeichnet, dass** es die Schritte umfasst:
- ein Kabelstrang wird in einen rohrförmigen Körper eingefädelt, bis ein Teil des freien Endes des Strangs über den rohrförmigen Körper übersteht,
- eine Ringdichtung (9), ein Ring (7) und eine Schelle (8) zum Festklemmen des Kabels werden über diesen Teil des freien Endes nacheinander aufgezogen,
- abisolierte Drähte (12) des Kabels (2) werden auf Kontakte eines Verbinders (1) gequetscht,
- das Kabel (2) wird nach außen zurückgezogen, bis die Dichtung (9) zwischen einem zweiten Abschnitt (6) des Körpers und dem Kabel, geschoben durch den Ring (7), zu liegen kommt, welcher selbst durch die Klemmschelle geschoben wird, wobei der Ring (7) und die Schelle (8) in einen ersten Abschnitt (5) des Körpers mit größerem Durchmesser als der zweite Abschnitt (6) gelangen, wobei die beiden Abschnitte unmittelbar benachbart sind, und,
- nachdem die Innenseite der Durchführung nach oben gewandt wurde, wird polymerisierbares Harz (3) in den ersten Abschnitt (5) gegossen und man lässt dieses polymerisieren.

## Claims

1. A wall bushing comprising:
- a bundle of cables (2) coated in a resin mass (3), the resin being surrounded by a tubular body (4), successively having, in the direction from the inside to the outside where the cable (2) extends, a first section (5) with a first diameter, followed by a second section (6) with a diameter smaller than that of the first section (5), and the bushing comprises:
∘ a collar (8) for clamping the cable (2),
∘ a ferrule (7) facing the first section (5) and
∘ an annular joint (9) accommodated between the second section (6) and the cable (2),
- the resin mass (3) being in contact with the outer face of the collar (8) and with the inner face of the ferrule (7),
**characterised in that** an electrical connector (1) is connected to the bundle of cables (2), only the part of the connector (1) adjacent to the bundle (2) and the part of the bundle (2) adjacent to the connector (1) being coated in the resin mass (3), and **in that** the collar (8) for clamping the cable pushes the ferrule (7) towards the second section (6).

2. A method of producing a successive wall bushing, **characterised in that** it comprises the stages:
- threading a bundle of cables into a tubular body until a part of the free end of the bundle sticks out of the tubular body,
- successively threading an annular joint (9), a ferrule (7) and a collar (8) for clamping the cable via this part of the free end,
- crimping bare wires (12) of the cable (2) onto contacts of a connector (1),
- withdrawing the cable (2) to the outside until the joint (9) is accommodated between a second section (6) of the body and the cable pushed by the ferrule (7), itself pushed by the clamping collar, the ferrule (7) and the collar (8) passing into a first section (5) of the body with a diameter larger than the second section (6), the two sections being immediately adjacent to one another, and
- after having turned the inner side of the bushing upwards, pouring polymerisable resin (3) into the first section (5) and allowing it to polymerise.
